# EUROPÄISCHE PATENTSCHRIFT

(11) **EP 2 047 156 B1**
(45) Veröffentlichungstag und Bekanntmachung des Hinweises auf die Patenterteilung: **02.12.2009**
(21) Anmeldenummer: 07725785.5
(22) Anmeldetag: 02.06.2007
(51) Int. Cl.: F16K 31/05, F16K 31/06

(54) **VENTILEINRICHTUNG MIT HANDHILFSBETÄTIGUNSEINRICHTUNG**
VALVE DEVICE WITH MANUAL AUXILIARY ACTUATING MECHANISM
DISPOSITIF DE SOUPAPE À SYSTÈME DE COMMANDE AUXILIAIRE MANUEL

(43) Veröffentlichungstag der Anmeldung: 15.04.2009
(73) Patentinhaber: FESTO AG & Co. KG, 73734 Esslingen (DE)
(72) Erfinder: LIEB, Jürgen, 72584 Hülben (DE); WOLTER, Eberhard, 73760 Ostfildern (DE)
(74) Vertreter: Abel, Martin
(86) Internationale Anmeldenummer: PCT/EP2007/004907
(87) Internationale Veröffentlichungsnummer: WO 2008/148403

(56) Entgegenhaltungen:
- DE-A1- 3 134 756
- DE-A1- 4 309 695
- DE-A1- 10 355 627
- DE-U1-202004 004 861

## Beschreibung

Die Erfindung betrifft eine Ventileinrichtung, mit mindestens einem elektrisch betätigbaren Ventil, das ein durch elektrische Ansteuerung zwischen einer ersten Schaltstellung und einer zweiten Schaltstellung verlagerbares Ventilglied aufweist, dem eine Handhilfsbetätigungseinrichtung zugeordnet ist, die einen axial verschiebbaren Betätigungsstößel aufweist, der durch manuelle Beaufschlagung eines Betätigungsabschnittes entgegen der Kraft einer Rückstellfeder aus einer unbetätigten Stellung in eine betätigte Stellung verschiebbar ist, um mit einem Antriebsabschnitt auf das Ventilglied einzuwirken und dieses aus der ersten Schaltstellung in die zweite Schaltstellung zu verlagern, und der durch Verriegelungsmittel in der betätigten Stellung lösbar verriegelbar ist, um das Ventilglied durch ständige Beaufschlagung in der zweiten Schaltstellung zu halten.

Eine aus der DE 43 09 695 A1 bekannte Ventileinrichtung dieser Art enthält zwei als Vorsteuerventile ausgebildete elektrisch betätigbare Ventile, die jeweils mit einer Handhilfsbetätigungseinrichtung ausgestattet sind. Die Handhilfsbetätigungseinrichtung ermöglicht ein von der elektrischen Ansteuerung unabhängiges, rein manuelles Umschalten des Ventilgliedes des elektrisch betätigbaren Ventils aus einer an einem Ventilsitz anliegenden ersten Schaltstellung in eine von dem Ventilsitz abgehobene zweite Schaltstellung. Hierbei wird die Verstellkraft mittels eines verschiebbaren Betätigungsstößels aufgebracht, der durch eine Rückstellfeder in eine unbetätigte Stellung vorgespannt ist. Der Betätigungsstößel besitzt einen mit der Hand beaufschlagbaren Betätigungsabschnitt und einen entgegengesetzten, auf das Ventilglied einwirkenden Antriebsabschnitt. Insgesamt ist der Betätigungsstößel ein einstückiges, starres Bauteil.

Soll das Ventilglied für längere Zeit ohne elektrische Unterstützung in der zweiten Schaltstellung gehalten werden, lässt sich der Betätigungsstößel in der betätigten Stellung lösbar verriegeln. Hierzu kann ein drehbares Riegelelement über den Betätigungsabschnitt des Betätigungsstößels geschwenkt werden.

Bei der Handhabung einer solchen Handhilfsbetätigungseinrichtung können bedingt durch Herstellungstoleranzen gewisse Probleme auftreten. Ist der dem Betätigungsstößel zur Verfügung stehende Hub toleranzbedingt zu klein, kann unter Umständen kein Verriegeln der betätigten Stellung vorgenommen werden. Möglicherweise lässt sich dies zwar bei nur geringen Maßabweichungen durch eine verstärkte manuelle Betätigungskraft kompensieren. Dies kann dann jedoch zu Beschädigungen an den Dichtflächen des Ventilgliedes führen. Bei Toleranzabweichungen mit entgegengesetzten Vorzeichen kann es geschehen, dass zwar die Verriegelungsfunktion gewährleistet ist, der verriegelte Betätigungsstößel jedoch nicht in dem Maße auf das Ventilglied einwirkt, dass dieses die zweite Schaltstellung sicher beibehält.

Es ist daher eine Aufgabe der vorliegenden Erfindung, die Handhilfsbetätigungseinrichtung so zu optimieren, dass ungeachtet auftretender Fertigungstoleranzen eine sichere und verschleißarme Funktion gewährleistet ist.

Zur Lösung dieser Aufgabe ist vorgesehen, dass der Betätigungsabschnitt und der Antriebsabschnitt des Betätigungsstößels als in der Verschieberichtung des Betätigungsstößels relativ zueinander verschiebbare Teile ausgebildet sind, zwischen denen eine sie von einander weg drückende, im Vergleich zu der Rückstellfeder stärke Toleranzausgleichsfeder wirksam ist, die die manuell auf den Betätigungsabschnitt ausgeübte Betätigungskraft auf den Antriebsabschnitt übertragen kann, wobei die Rückstellfeder an dem Antriebsabschnitt angreift und wobei die Verriegelungsmittel dem Betätigungsabschnitt zugeordnet und so ausgebildet sind, dass die Toleranzausgleichsfeder bei in der betätigten Stellung des Betätigungsstößels verriegeltem Betätigungsabschnitt stets stärker gespannt ist als in der unbetätigten Stellung des Betätigungsstößels.

Auf diese Weise wird erreicht, dass sich auf den Betätigungsvorgang der Handhilfsbetätigungseinrichtung auswirkende Fertigungstoleranzen praktisch keinen negativen Einfluss mehr haben. Es ist stets gewährleistet, dass sich der Betätigungsstößel in der betätigten Stellung problemlos verriegeln lässt und dass hierbei gleichzeitig das zu betätigende Ventilglied mit Sicherheit in der zweiten Schaltstellung gehalten wird. Für diesen Effekt maßgeblich verantwortlich ist die Auftrennung des Betätigungsstößels in zwei von einander unabhängige Stößelabschnitte in Gestalt eines Betätigungsabschnittes und eines Antriebsabschnittes, die in der Verschieberichtung des Betätigungsstößels relativ zueinander verschiebbar sind. Eine zwischen diesen beiden Teilen wirksame Toleranzausgleichsfeder ist stark genug, um die manuell auf den Betätigungsabschnitt ausgeübten Betätigungskräfte auf den Antriebsabschnitt zu übertragen, so dass sich zunächst beide Abschnitte und mithin der gesamte Betätigungsstößel bewegen können, wie wenn es sich um ein einheitliches Bauteil handeln würde. Die Toleranzausgleichsfeder ist insbesondere stark genug, um die zum Umschalten des ventilgliedes in die zweite Schaltstellung erforderliche Stellkraft zu übertragen. Ist das Ventilglied in diese zweite Schaltstellung umgeschaltet und durch Anlage an einem Anschlag an einer weiteren Bewegung blockiert, ermöglicht die Toleranzausgleichsfeder eine weitere Relativbewegung des Betätigungsabschnittes mit Bezug zum Antriebsabschnitt, bis der Verriegelungsvorgang ausgeführt wurde. Für die Rückstellung in die unbetätigte Stellung ist die von der Toleranzausgleichsfeder unabhängige Rückstellfeder verantwortlich, die nur an dem Antriebsabschnitt angreift. Durch die Toleranzausgleichsfeder wird also zum einen die antriebsmäßige Kopplung zwischen Betätigungsabschnitt und Antriebsabschnitt bewerkstelligt, zum andern aber auch eine einen Ausgleich von Toleranzen bewirkende Relativbewegung zwischen Betätigungsabschnitt und Antriebsabschnitt zugelassen. Indem die Auslegung insgesamt so getroffen ist, dass die Toleranzausgleichsfeder bei verriegeltem Betätigungsabschnitt stärker gespannt ist als bei unbetätigtem Betätigungsstößel, ist sichergestellt, dass der Antriebsabschnitt das Ventilglied stets mit einer die zweite Schaltstellung gewährleistenden Stellkraft beaufschlagt.

Zweckmäßigerweise wird man das Stößelsystem so auslegen, dass der Betätigungsabschnitt ausgehend von der unbetätigten Stellung stets um den Maximalwert der vorhandenen Fertigungstoleranzen verschoben werden muss, bevor die Verriegelungsmittel aktivierbar sind. Wird der Antriebsabschnitt vor dem Zurücklegen dieses Maximalwertes an einer Weiterbewegung gehindert, weil das Ventilglied seine zweite Schaltstellung erreicht hat und sich an einem Anschlag abstützt, kann durch Weiterverschieben des Betätigungsabschnittes die Toleranzausgleichsfeder weiter zusammengedrückt werden, bis die Verriegelung möglich ist.

Vorteilhafte Weiterbildungen der Erfindung gehen aus den Unteransprüchen hervor.

Die Ventileinrichtung ist insbesondere so ausgebildet, dass das Ventilglied in der ersten Schaltstellung unter gleichzeitigem Verschließen eines Ventilkanals an einem Ventilsitz anliegt und in der zweiten Schaltstellung gegen eine Federkraft von dem Ventilsitz abgehoben ist, um den Ventilkanal frei zu geben.

Bei dem elektrisch betätigbaren Ventil handelt es sich vorzugsweise um ein Magnetventil mit einer Elektromagneteinrichtung zur elektrisch hervorgerufen Betätigung des Ventilgliedes. Allerdings kann das erfindungsgemäße Prinzip auch auf andere Arten von Ventilen übertragen werden.

Der Betätigungsabschnitt und der Antriebsabschnitt können prinzipiell trotz ihrer relativen Verschiebbarkeit gemeinsame Komponenten eines einstückigen Bauteils sein, wenn eine die relative Beweglichkeit gewährleistende nachgiebige Verbindung vorhanden ist, beispielsweise ein Verbindungsbereich nach Art eines Faltenbalges. Vorgezogen wird allerdings eine Bauform, bei der der Betätigungsabschnitt und der Antriebsabschnitt als zwei gesonderte Teile ausgebildet sind. Damit der Betätigungsstößel gleichwohl eine Stößeleinheit bildet, können diese beiden gesonderten Teile quer zur Verschieberichtung des Betätigungsstößels ineinander eingesteckt sein.

In allen Fällen ist es von Vorteil, wenn Betätigungsabschnitt und Antriebsabschnitt in der Verschieberichtung des Betätigungsstößels relativ zueinander verschiebbar miteinander in Eingriff stehen. Durch den gegenseitigen Eingriff erfolgt eine gegenseitige Stabilisierung in der Relativbewegung, so dass eine sichere Führung gewährleistet ist, auch ohne dass an den anderen Ventilkomponenten umfangreiche Führungsmaßnahmen getroffen werden. Vorzugsweise befinden sich am Betätigungsabschnitt und am Antriebsabschnitt miteinander kooperierende Anschlagmittel, durch die diese beiden Teile in beiden axialen Richtungen gegenseitig fixiert werden, unter Gewährleistung eines für den Toleranzausgleich erforderlichen axialen relativen Verschiebehubes.

Wenn der Betätigungsabschnitt und Antriebsabschnitt durch miteinander kooperierende Anschlagmittel an einem Auseinanderfahren über ein bestimmtes Maß hinaus gehindert sind, kann die Toleranzausgleichsfeder so ausgeführt werden, dass sie unter ständiger Vorspannung steht und die beiden Abschnitte auch schon bei unbetätigtem Betätigungsstößel in einander entgegengesetzte Richtungen beaufschlagt. Es ist jedoch ohne weiteres auch eine Auslegung möglich, bei der die Toleranzausgleichsfeder in der unbetätigten Stellung des Betätigungsstößels noch keine Vorspannung erfährt und erst im Zusammenhang mit dem Verriegelungsvorgang komprimiert wird. In diesem Fall kann bei Bedarf auf Anschlagmittel verzichtet werden, die die beiden Abschnitte am Auseinanderfahren hindern.

Zugunsten besonders kompakter Abmessungen kann die Toleranzausgleichsfeder im Innern des Betätigungsstößels untergebracht sein.

Bei der Toleranzausgleichsfeder handelt es sich im übrigen, wie auch bei der Rückstellfeder, zweckmäßigerweise um eine Druckfeder.

Vorzugsweise wird das Stößelsystem so ausgelegt, dass der zwischen dem Betätigungsabschnitt und dem Antriebsabschnitt vorhandene axiale Verschiebespielraum so groß ist, dass zwischen diesen beiden Abschnitten ein prinzipiell eine weitere gegenseitige Annäherung ermöglichender Restspielraum verbleibt, wenn der Betätigungsabschnitt verriegelt ist. Auf diese Weise ist besonders zuverlässig eine umfassende Toleranzkompensation möglich, einschließlich Kompensation von aufgrund von Temperaturschwankungen auftretenden Materialdehnungen.

Für die Verriegelung des Betätigungsabschnittes sind unterschiedliche Maßnahmen denkbar. Beispielsweise wäre eine Rastverriegelung möglich, wobei die Verriegelung selbsttätig stattfindet, wenn der Betätigungsabschnitt um eine bestimmte Wegstrecke verschoben wurde. Eine höhere Sicherheit gegen versehentliches Zurückschalten in die unbetätigte Stellung vermitteln allerdings regelmäßig solche Verriegelungsmittel, zu deren Aktivierung zusätzlich zum axialen Verschieben des Betätigungsabschnittes eine weitere Handhabungsmaßnahme erforderlich ist.

In dem vorgenannten Zusammenhang können die Verriegelungsmittel insbesondere so ausgebildet sein, dass sie durch Verdrehen des Betätigungsabschnittes um seine Längsachse in und außer Verriegelungseingriff bringbar sind. Der Betätigungsabschnitt kann hierbei ein Drehriegelglied bilden.

Die Ventileinrichtung ist insbesondere als vorgesteuertes Mehrwegeventil ausgeführt. Hierbei enthält sie ein fluidisch betätigbares Hauptventil, an dem das mit der Handhilfsbetätigungseinrichtung ausgestattete elektrisch betätigbare Ventil als Vorsteuerventil angeordnet ist.

Nachfolgend wird die Erfindung anhand der beiliegenden Zeichnung näher erläutert. In dieser zeigen:
- Figur 1: eine bevorzugte erste Bauform der erfindungsgemäßen Ventileinrichtung in einem Längsschnitt und in nur teilweiser Darstellung, wobei das Ventilglied die erste Schaltstellung und der Betätigungsstößel die unbetätigte Stellung einnimmt, das Ganze gemäß Schnittlinie I-I aus Figur 2,
- Figur 2: die Anordnung aus Figur 1 in einem Querschnitt ge- mäß Schnittlinie II-II,
- Figur 3: die Ventileinrichtung aus Figur 1 bei in die betä- tigte Stellung verlagertem, noch unverriegeltem Be- tätigungsstößel und in die zweite Schaltstellung verlagertem Ventilglied, gemäß Schnittlinie III-III aus Figur 4,
- Figur 4: einen Querschnitt durch die Anordnung aus Figur 3 gemäß Schnittlinie IV-IV,
- Figur 5: eine perspektivische Einzeldarstellung des Betäti- gungsstößels und der Verriegelungsmittel in dem den Figuren 3 und 4 entsprechenden Betätigungszustand,
- Figur 6: erneut einen Längsschnitt durch die Ventileinrich- tung, hier bei in der betätigten Stellung verrie- geltem Betätigungsstößel, gemäß Schnittlinie VI-VI aus Figur 7, und
- Figur 7: einen Querschnitt durch die Anordnung aus Figur 6 gemäß Schnittlinie VII-VII.

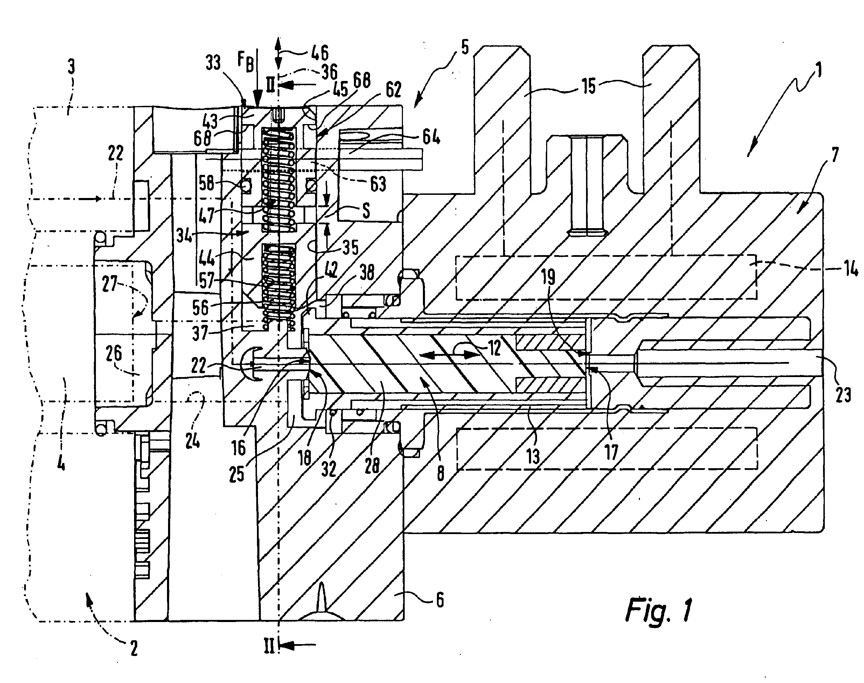

Die Figuren 1, 3 und 6 zeigen jeweils im Längsschnitt einen Endabschnitt einer insgesamt mit Bezugsziffer 1 bezeichneten Ventileinrichtung, die hier in Form eines vorgesteuerten Mehrwegeventils ausgebildet ist. Sie enthält ein in Figur 1 strichpunktiert angedeutetes Hauptventil 2 an sich bekannter Bauart, das über ein Hauptventilgehäuse 3 verfügt, in dem ein zwischen verschiedenen Schaltstellungen umschaltbares Hauptventilglied 4 angeordnet ist. Je nach Schaltstellung vermag das Hauptventilglied 4 nicht weiter dargestellte Hauptventilkanäle in unterschiedlichem Muster miteinander zu verbinden, um gewisse Fluidströmungen zuzulassen oder zu unterbinden. Normalerweise verlaufen in dem Hauptventilgehäuse 3 ein mit einer Druckquelle verbindbarer Speisekanal, ein mit einer Drucksenke, z.B. der Atmosphäre verbindbarer Entlastungskanal und mindestens ein mit einem zu betätigenden Verbraucher verbindbarer Arbeitskanal. Der Arbeitskanal kann dann je nach Schaltstellung des Hauptventilgliedes 4 entweder mit dem Speisekanal oder mit dem Entlastungskanal verbunden werden.

An den beiden Stirnseiten des Hauptventils 2 ist jeweils ein elektrisch betätigbares Vorsteuerventil 5 angeordnet. In der Zeichnung ist nur eines dieser beiden Vorsteuerventile 5 gezeigt, das andere ist in gleicher Weise gestaltet. Die beiden Vorsteuerventile 5 können die Fluidbeaufschlagung des Hauptventilgliedes 4 steuern, um dieses in die jeweils gewünschte Schaltstellung zu verlagern.

Auf das zweite Vorsteuerventil kann verzichtet werden, wenn statt dessen zum Beispiel eine Federeinrichtung zur Rückstellung des Hauptventilgliedes 4 verwendet wird.

Sind zwei Vorsteuerventile 5 vorhanden, können diese auch gemeinsam an ein und demselben Endbereich des Hauptventils 2 angeordnet werden, insbesondere nach dem Vorbild der DE 43 09 695 A1.

Das Vorsteuerventil 5 enthält einen ein- oder mehrteiligen Grundkörper 6, der stirnseitig an das Hauptventilgehäuse 3 angesetzt ist. An ihn insbesondere stirnseitig angebaut ist eine elektrische Antriebseinrichtung in Gestalt einer Elektromagneteinrichtung 7. Bei dem Vorsteuerventil 5 des Ausführungsbeispiels handelt es sich mithin um ein Magnetventil. Die Erfindung lässt sich allerdings auch bei anderen Ventilarten realisieren, beispielsweise bei Piezoventilen.

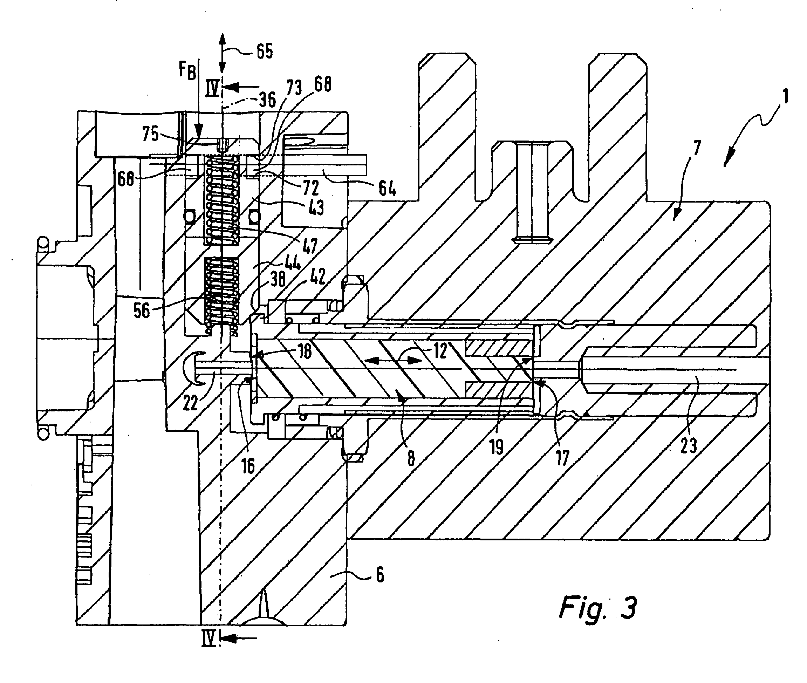

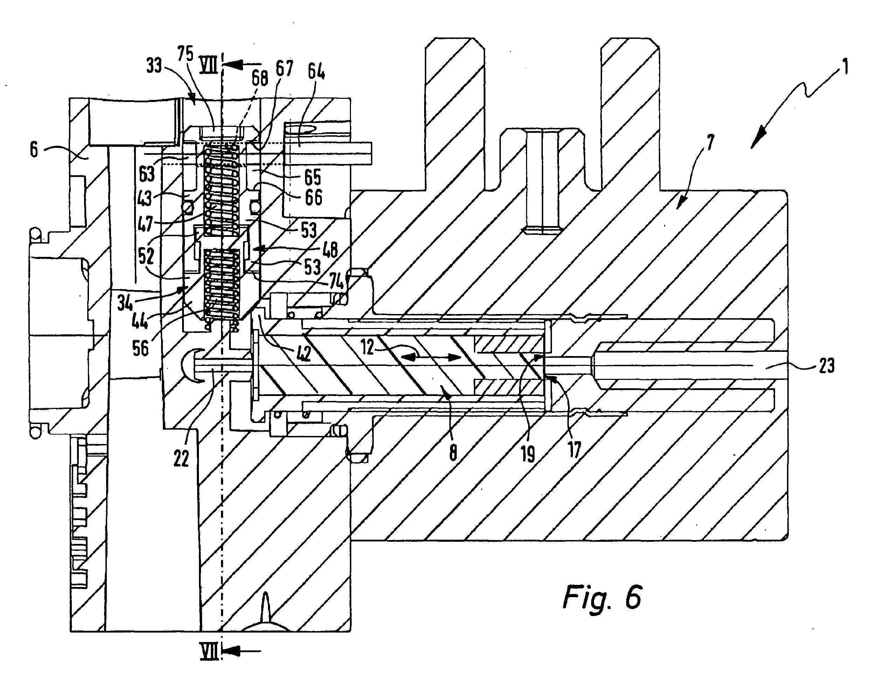

Die Elektromagneteinrichtung 7 kann derart elektrisch angesteuert werden, dass sie ein Ventilglied 8 unter Ausführung einer linearen Umschaltbewegung 12 zwischen einer aus Figur 1 ersichtlichen ersten Schaltstellung und einer aus Figuren 3 und 6 ersichtlichen zweiten Schaltstellung verlagert. Das Ventilglied 8 ist hierzu ein integraler Bestandteil eines beweglichen Magnetankers 13 der Elektromagneteinrichtung 7, der durch elektrisches Erregen einer Spuleneinrichtung 14 verstellbar ist. Die hierfür erforderlichen elektrischen Betätigungssignale können über eine elektrische Schnittstelleneinrichtung 15 eingespeist werden.

Anstatt als Baueinheit können das Ventilglied 8 und der bewegliche Magnetanker 13 auch als gesonderte Teile ausgeführt sein, die auf beliebige Weise antriebsmäßig miteinander verbunden sind.

Das Ventilglied 8 ist insbesondere stößelartig ausgebildet und verfügt an seinen beiden Stirnseiten über eine erste bzw. zweite Dichtfläche 16, 17. Die erste Dichtfläche 16 liegt einem ersten Ventilsitz 18 gegenüber, der die Mündung eines in dem Grundkörper 6 verlaufenden ersten Ventilkanals 22 umrahmt. Der entgegengesetzten zweiten Dichtfläche 17 liegt ein bevorzugt an der Elektromagneteinrichtung 7 ausgebildeter zweiter Ventilsitz 19 gegenüber, der die Kanalmündung eines andernends zur Atmosphäre ausmündenden zweiten Ventilkanals 23 umrahmt.

Der erste Ventilkanal 22 steht im Betrieb der Ventileinrichtung 1 mit einer Druckquelle in Verbindung, wobei er über den in Figur 1 strichpunktiert angedeuteten Kanalverlauf mit dem oben erwähnten Speisekanal des Hauptventils 2 verbunden sein kann. Die Druckquelle liefert unter atmosphärischem Überdruck stehendes fluidisches Druckmedium, insbesondere Druckluft.

Der erste Ventilsitz 18 liegt in einer in dem Grundkörper 6 ausgebildeten Ventilkammer 25, die über einen dritten Ventilkanal 24 in ständiger Verbindung mit einer zu dem Hauptventil 2 gehörenden Beaufschlagungskammer 26 steht, die von einer mit dem Hauptventilglied 4 antriebsmäßig verbundenen Beaufschlagungsfläche 27 begrenzt ist.

Befindet sich das Ventilglied 8 in der ersten Schaltstellung, trennt es den ersten Ventilkanal 22 von der Ventilkammer 25 ab und verbindet gleichzeitig den dritten Ventilkanal 24 mit dem zur Atmosphäre führenden zweiten Ventilkanal 23. Die Beaufschlagungskammer 26 ist mithin drucklos, so dass das Hauptventilglied 4 eine aus Figur 1 ersichtliche Schaltstellung einnehmen kann, in der die Beaufschlagungskammer 26 ein minimales Volumen aufweist.

In der zweiten Schaltstellung gemäß Figuren 3 und 6 ist das Ventilglied 8 vom ersten Ventilsitz 18 abgehoben und liegt mit seiner zweiten Dichtfläche 17 am zweiten Ventilsitz 19 an. Dadurch ist der zweite Ventilkanal 23 abgesperrt und es kann Druckmedium aus dem geöffneten ersten Ventilkanal 22 über die Ventilkammer 25 in die Beaufschlagungskammer 26 einströmen, um das Hauptventilglied 4 zu beaufschlagen und in eine andere Schaltstellung zu verlagern.

Die beiden Dichtflächen 16, 17 sind zweckmäßigerweise Bestandteile gesonderter oder eines gemeinsamen gummielastischen Dichtungselementes 28, das zu dem Ventilglied 8 gehört.

Bei deaktivierter Elektromagneteinrichtung 7 liegt die erste Schaltstellung vor, die durch eine das Ventilglied 8 beaufschlagende Federeinrichtung 32 aufrechterhalten wird. Zum Umschalten in die zweite Schaltstellung ist mithin die rückstellende Kraft der Federeinrichtung 32 zu überwinden.

Das Vorsteuerventil 5 ist zusätzlich mit einer Handhilfsbetätigungseinrichtung 33 ausgestattet, die es ermöglicht, das Ventilglied 8 ohne Mitwirkung der Elektromagneteinrichtung 7 durch eine rein manuell aufbringbare Betätigungskraft aus der ersten Schaltstellung in die zweite Schaltstellung zu verlagern und dort auch so lange wie gewünscht zu halten. Die Handhilfsbetätigungseinrichtung 33 wird vor allem zu Wartungszwecken oder bei einem Testbetrieb der Ventileinrichtung 1 genutzt.

Die Handhilfsbetätigungseinrichtung 33 enthält einen Betätigungsstößel 34, der in einer zur Außenfläche des Grundkörpers 6 hin offenen Führungsausnehmung 35 des Grundkörpers 6 in Richtung seiner Längsachse 36 linear verschiebbar angeordnet ist. Der weiter im Innern des Grundkörpers 6 angeordnete innere Endabschnitt 37 der Führungsausnehmung 35 steht über einen Durchgang 38 mit demjenigen Bereich der Ventilkammer 25 in Verbindung, in dem sich der die erste Dichtfläche 16 aufweisende vordere Endabschnitt 42 des Ventilgliedes 8 befindet.

Der Betätigungsstößel 34 ist insbesondere so angeordnet, dass seine Längsachse 36 und mithin die Verschieberichtung 46 quer und vorzugsweise rechtwinkelig zur Richtung der Umschaltbewegung 12 des Ventilgliedes 8 verläuft.

Der Betätigungsstößel 34 ist in zwei axial aufeinanderfolgende Längenabschnitte unterteilt, einen im Bereich des inneren Endabschnittes 37 angeordneten Antriebsabschnitt 44 und einen im Bereich des entgegengesetzten äußeren Endabschnittes 45 der Führungsausnehmung 35 liegenden Betätigungsabschnitt 43. Da der äußere Endabschnitt 45 zur Außenfläche des Grundkörpers 6 ausmündet, ist der dort liegende Betätigungsabschnitt 43 von außen her zugänglich, um manuell mit einer Betätigungskraft F_{B} beaufschlagbar zu sein, die in Richtung des inneren Endabschnittes 37 wirkt.

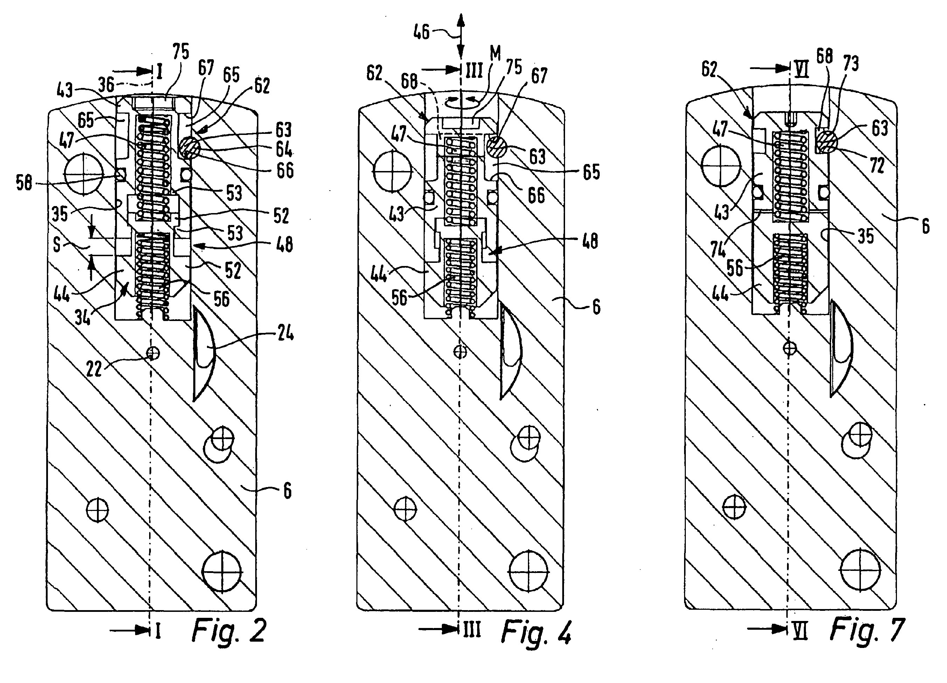

Der Betätigungsabschnitt 43 und der Antriebsabschnitt 44 sind derart voneinander entkoppelt, dass sie innerhalb bestimmter Grenzen in der durch einen Doppelpfeil angedeuteten axialen Verschieberichtung 46 des Betätigungsstößels 34 relativ zueinander verschiebbar sind. Der für diese Relativbewegung zur Verfügung stehende axiale Verschiebespielraum ist in der Zeichnung bei "S" kenntlich gemacht. Somit sind die beiden Abschnitte 43, 44 relativ zueinander zwischen einer aus Figuren 1 und 2 ersichtlichen auseinandergefahrenen Relativposition und einer aus Figuren 3 und 4 ersichtlichen zusammengeschobenen Relativposition verschiebbar.

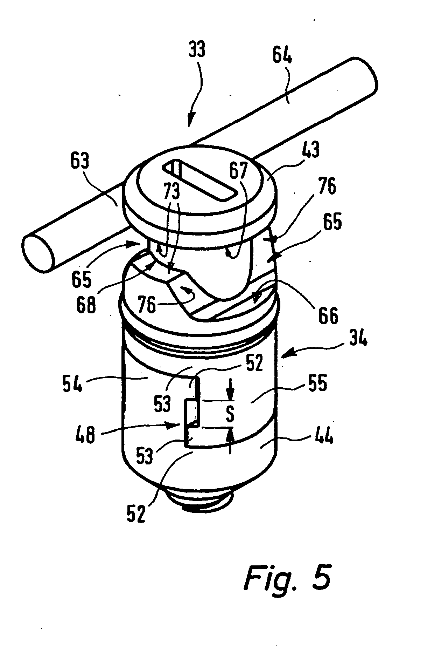

Betätigungsabschnitt 43 und Antriebsabschnitt 44 sind zweckmäßigerweise als separate Teile ausgebildet, wie dies auch gut aus Figur 5 ersichtlich ist. Sofern der benötigte Verschiebespielraum gewahrt bleibt, können die beiden Abschnitte 43, 44 allerdings auch miteinander verbunden sein, insbesondere durch einen gummielastischen Verbindungsabschnitt (nicht dargestellt).

Zwischen dem Betätigungsabschnitt 43 und dem Antriebsabschnitt 44 ist eine Feder wirksam, die aufgrund ihrer diesbezüglichen Funktion als Toleranzausgleichsfeder 47 bezeichnet sei. Sie ist so angeordnet, dass sie die beiden Abschnitte 43, 44 axial voneinander wegdrückt. Bevorzugt ist sie als Druckfeder ausgeführt, insbesondere als Schraubendruckfeder, wobei sie zur Realisierung kompakter Abmessungen insbesondere im Innern des Betätigungsstößels 34 untergebracht ist. Dies ist aus den Schnittdarstellungen gut ersichtlich.

Vorzugsweise ist die Toleranzausgleichsfeder 47 koaxial zu den beiden Abschnitten 43, 44 des Betätigungsstößels 34 angeordnet.

Durch die Toleranzausgleichsfeder 47 sind die beiden Abschnitte 43, 44 in die auseinandergefahrene Relativposition vorgespannt. Mit anderen Worten verfügt die Toleranzausgleichsfeder 47 bereits über eine zumindest geringfügige Vorspannung, wenn die beiden Abschnitte 43, 44 die auseinandergefahrene Relativposition einnehmen. Letztere ist durch Anschlagmittel 48 vorgegeben, die ein weitergehendes Auseinanderfahren der beiden Abschnitte 43, 44 verhindert. Durch diese Anschlagmittel 48 wird zweckmäßigerweise auch das Zusammenschieben der beiden Abschnitte 43, 44 begrenzt, so dass sie letztlich den schon erwähnten Verschiebespielraum "S" vorgeben.

Exemplarisch bestehen die Anschlagmittel 48 aus sich quer zu der Verschieberichtung 46 hintergreifenden Anschlagvorsprüngen 52, 53 an den beiden Abschnitten 43, 44. Exemplarisch sind diese Anschlagvorsprünge 52, 53 paarweise vorhanden und definieren gleichzeitig zwei Halteabschnitte 54, 55, mit denen die beiden Abschnitte 43, 44 des Betätigungsstößels 34 bei dessen Zusammenbau quer zu der Längsachse 36 ineinander einschiebbar sind. Durch das Zusammenwirken der beiden Halteabschnitte 54, 55 wird zugleich zweckmäßigerweise auch eine Verdrehsicherung zwischen dem Betätigungsabschnitt 43 und dem Antriebsabschnitt 44 hervorgerufen.

Auf Anschlagmittel 48, die die beiden Abschnitte 43, 44 des Betätigungsstößels 34 am Auseinanderfahren hindern, kann verzichtet werden, wenn in der auseinandergefahrenen Relativposition keine Vorspannung zwischen den beiden Abschnitten 43, 44 gewünscht ist.

Durch eine Rückstellfeder 56 ist der Betätigungsstößel 34 in Richtung nach axial außen in die aus Figuren 1 und 2 ersichtliche unbetätigte Stellung vorgespannt. Durch Aufbringen der Betätigungskraft F_{B} kann der Betätigungsstößel 34 entgegen der Kraft der Rückstellfeder 56 aus der unbetätigten Stellung in die aus Figuren 3 und 4 ersichtliche betätigte Stellung verschoben werden. Wird auf eine noch zu erläuternde Verriegelungsmaßnahme verzichtet und die Betätigungskraft F_{B} anschließend wieder weggenommen, drückt die Rückstellfeder 56 den Betätigungsstößel 34 wieder in die unbetätigte Stellung zurück.

Die Rückstellfeder 56 greift seitens des Betätigungsstößels 34 ausschließlich an dem Antriebsabschnitt 44 an. Sie wirkt zwischen diesem Antriebsabschnitt 44 und dem Grundkörper 6, wobei sie zweckmäßigerweise in dem inneren Endabschnitt 37 der Führungsausnehmung 35 untergebracht ist, also im Bereich der dem Betätigungsabschnitt 43 abgewandten Stirnseite des Antriebsabschnittes 44. Hierbei kann die Rückstellfeder in eine Zentrierausnehmung 57 des Antriebsabschnittes 44 eintauchen. Auch bei der Rückstellfeder 56 handelt es sich vorzugsweise um eine Druckfeder insbesondere eine Schraubendruckfeder.

Die Toleranzausgleichsfeder 47 ist stärker als die Rückstellfeder 56 und hat verglichen mit dieser eine steilere Federkennlinie. Wird daher ausgehend von der unbetätigten Stellung die Betätigungskraft F_{B} aufgebracht, verhalten sich der Betätigungsabschnitt 43, die Toleranzausgleichsfeder 47 und der Antriebsabschnitt 44 zunächst wie ein starrer Körper, der als Ganzes ohne Relativbewegung seiner Komponenten axial ins Innere der Führungsausnehmung 35 hinein verlagert wird, unter Komprimierung der schwächeren Rückstellfeder 56. Die Toleranzausgleichsfeder 47 fungiert hierbei als Kraftübertragungselement zur Übertragung der auf den Betätigungsabschnitt 43 ausgeübten Betätigungskraft F_{B} auf den Antriebsabschnitt 44. Der Verschiebespielraum "S" bleibt hierbei konstant bei seinem maximalen Maß.

Wird der Antriebsabschnitt 44 jedoch an einer Weiterbewegung gehindert, führt die unverändert anstehende Betätigungskraft F_{B} zu einem Zusammenschieben der beiden Abschnitte 43, 44 unter gleichzeitiger Komprimierung der Toleranzausgleichsfeder 47. Hierbei verringert sich der Verschiebespielraum "S".

Beim Verschieben in die betätigte Stellung beaufschlagt der Antriebsabschnitt 44 nach Zurücklegen einer kurzen Wegstrecke über den Durchgang 38 hinweg den vorderen Endabschnitt 42 des Ventilgliedes 8. Dieses ist an dem vorderen Endabschnitt 42, wie zweckmäßigerweise auch der Antriebsabschnitt 44 an seinem vorderen Ende, abgeschrägt. Durch diese Beaufschlagung wird das Ventilglied 8 in die zweite Schaltstellung verlagert. Damit dies gewährleistet ist, erfolgt eine Auslegung der Toleranzausgleichsfeder 47 derart, dass sie auf jeden Fall stärker ist als die Rückstellkraft der Rückstellfeder 56 und zuzüglich die vor allem durch die Federeinrichtung 32 hervorgerufene Gegenkraft des Ventilgliedes 8.

Da beim Ausführungsbeispiel nach dem Verlassen der ersten Schaltstellung ein Überdruck in der Ventilkammer 25 herrscht, der auch den Antriebsabschnitt 44 beaufschlagt, ist hier die Toleranzausgleichsfeder 47 derart dimensioniert, dass sie auch diese fluidische Gegenkraft überwinden kann.

Ein Fluidaustritt zur Atmosphäre durch die Führungsausnehmung 35 hindurch wird im übrigen dadurch verhindert, dass an dem Betätigungsabschnitt 43 ein mit der Wandung der Führungsausnehmung 45 kooperierender Dichtungsring 58 angeordnet ist.

Durch den gegenseitigen Eingriff ihrer Halteabschnitte 54, 55 stehen der Betätigungsabschnitt 43 und der Antriebsabschnitt 44 unmittelbar selbst in gegenseitigem Verschiebeeingriff zur Gewährleistung der relativen Verschiebebewegung 46. Dadurch sind die beiden Abschnitte 43, 44 des Betätigungsstößels 44 zuverlässig gegen Verkanten gesichert, auch wenn größere Abmessungsschwankungen zwischen dem Außendurchmesser der Abschnitte 43, 44 und dem Innendurchmesser der Führungsausnehmung 35 vorliegen.

Durch Verriegelungsmittel 62 kann der Betätigungsstößel 34 in seiner betätigten Stellung lösbar verriegelt werden, so dass er bei Wegnahme der manuell aufgebrachten Betätigungskraft F_{B} nicht in die unbetätigte Stellung zurückkehren kann. Die Verriegelung bewirkt, dass der Betätigungsstößel 34 in seiner betätigten Stellung verharrt und das Ventilglied 8 durch ständige Beaufschlagung in der zweiten Schaltstellung hält und hierbei insbesondere fest an den als Anschlag fungierenden zweiten Ventilsitz 19 andrückt.

Ein wesentlicher Aspekt dabei ist, dass die Verriegelungsmittel 62 dem Betätigungsabschnitt 43 des Betätigungsstößels 34 zugeordnet sind und nicht mit dem Antriebsabschnitt 44 kooperieren.

Die Verriegelungsmittel 62 beinhalten zweckmäßigerweise einen im Bereich des Antriebsabschnittes 44 radial in die Führungsausnehmung 35 hineinragenden, fest mit dem Grundkörper 6 verbundenen Verriegelungsvorsprung 63. Dieser ist beispielhaft von einem stiftartigen Verriegelungselement 64 gebildet, das derart in den Grundkörper 6 eingesteckt ist, dass es die Führungsausnehmung 35 im Bereich ihres Außenumfanges entsprechend dem Verlauf einer Sekante quer durchsetzt. Das stiftartige Verriegelungselement 64 kann in entsprechende Bohrungen des Grundkörpers 6 eingepresst sein.

Am Außenumfang des Antriebsabschnittes 44 befindet sich mindestens eine Aussparung 65, in die das Verriegelungselement 64 eingreifen kann. Sie erstreckt sich in der Verschieberichtung 46 und wird axial von zwei einander zugewandten Begrenzungsflächen 66, 67 begrenzt. Die näher beim Antriebsabschnitt 44 liegende Begrenzungsfläche sei im folgenden als innere Begrenzungsfläche 67 bezeichnet, die gegenüberliegende Begrenzungsfläche 68 als äußere Begrenzungsfläche.

An die sich nur ein Stück weit um den Betätigungsabschnitt 43 herum erstreckende Aussparung 65 schließt sich in der Umfangsrichtung des Betätigungsabschnittes 43 mindestens eine sich in der Umfangsrichtung erstreckende Verriegelungsnut 68 an, deren in der Verschieberichtung 46 gemessene Abmessungen geringer sind als diejenigen der Aussparung 65. Die Verriegelungsnut 68 verfügt über einander zugewandte, axial orientierte Nutflanken 72, 73, wobei die näher zum Antriebsabschnitt 44 liegende Nutflanke 72 als innere Nutflanke und die axial weiter außen liegende Nutflanke 73 als äußere Nutflanke bezeichnet sei. Zweckmäßigerweise geht die äußere Begrenzungsfläche 67 unmittelbar in die äußere Nutflanke 73 über.

Derart ausgebildet, können der Verriegelungsvorsprung 63 und die Verriegelungsnut 68 durch Verdrehen des Betätigungsabschnittes 43 um seine Längsachse 46 in und außer Verriegelungseingriff gebracht werden. Mit anderen Worten bildet der Betätigungsabschnitt 43 ein Drehriegelglied.

Um ein Verlagern zwischen der unbetätigten und der betätigten Stellung zu ermöglichen, wird der Betätigungsabschnitt 43 in eine Freigabestellung verdreht, in der der Verriegelungsvorsprung 63 in der Aussparung 65 zu liegen kommt. Die beiden Begrenzungsflächen 66, 67 begrenzen hierbei den axialen Verschiebeweg des Betätigungsabschnittes 43 in beiden axialen Richtungen. So lange keine Betätigungskraft F_{B} aufgebracht ist, stützt sich der Betätigungsabschnitt 43 mit seiner inneren Begrenzungsfläche 66 gemäß Figuren 1 und 2 an dem Verriegelungsvorsprung 63 nach axial außen hin ab. Die Anpresskraft resultiert hier aus der Federkraft der Rückstellfeder 56, wobei der Kraftfluss von der Rückstellfeder 56 über den Antriebsabschnitt 44 und die Toleranzausgleichsfeder 47 zu dem Betätigungsabschnitt 43 erfolgt.

Ausgehend hiervon erfolgt das Verlagern des Betätigungsstößels 34 in die betätigte Stellung durch Aufbringen der Betätigungskraft F_{B} unter Beibehaltung der die Freigabestellung hervorrufenden Drehwinkellage. Der Betätigungsstößel 34 wandert nach unten und verschiebt gleichzeitig das Ventilglied 8 in Richtung der zweiten Schaltstellung. Hierbei nähert sich die äußere Begrenzungsfläche 67 von axial außen her an den Verriegelungsvorsprung 63 an.

Die Handhilfsbetätigungseinrichtung 33 ist unter Berücksichtigung der zugelassenen Fertigungstoleranzen so ausgelegt, dass das Ventilglied 8 seine zweite Schaltstellung auf jeden Fall erreicht, bevor die äußere Begrenzungsfläche 67 auf den Verriegelungsvorsprung 63 aufläuft. Mit anderen Worten wird das einheitliche Verschieben des Betätigungsabschnittes 43, der Toleranzausgleichsfeder 47 und des Antriebsabschnittes 44 gestoppt, wenn das von dem Antriebsabschnitt 44 beaufschlagte Ventilglied 8 aufgrund des Erreichens des zweiten Ventilsitzes 19 nicht mehr weiter zurückweichen kann. Dieser Zwischenzustand liegt kurz vor Erreichen des in Figuren 3 und 4 gezeigten Betriebszustandes vor. In diesem Betriebszustand kann der Betätigungsabschnitt 43 noch nicht aus der Freigabestellung in eine Verriegelungsstellung verschwenkt werden, weil die Verriegelungsnut 68 noch nicht auf gleicher Höhe mit dem Verriegelungsvorsprung 63 liegt.

Zum Verriegeln des betätigten Zustandes des Betätigungsstößels 34 ist ausgehend von dem genannten Zwischenzustand eine verstärkte Betätigungskraft F_{B} auf den Betätigungsabschnitt 43 auszuüben. Dies hat zur Folge, dass die sich an dem an einer Weiterbewegung gehinderten Antriebsabschnitt 44 abstützende Toleranzausgleichsfeder 47 komprimiert wird und sich der Betätigungsabschnitt 43 axial an den Antriebsabschnitt 44 annähert. Die Annäherung ist soweit möglich, bis die Anschlagmittel 48 aufeinander aufgelaufen sind. Der Betätigungsabschnitt 43 und der Antriebsabschnitt 44 sind jetzt weitest möglich zusammengeschoben, wie dies aus Figuren 3 und 4 ersichtlich ist. Dies hat gleichzeitig zur Folge, dass sich nun, wie vor allem aus Figur 3 ersichtlich ist, die Verriegelungsnut 68 auf gleicher axialer Höhe mit dem Verriegelungsvorsprung 63 befindet. Somit kann durch Einleiten eines Drehmomentes "M" in den Betätigungsabschnitt 43 dieser gedreht werden, so dass der Verriegelungsvorsprung 63 letztlich gemäß Figuren 6 und 7 in der Verriegelungsnut 68 zu liegen kommt. Wird nun die Betätigungskraft F_{B} entfernt, drückt die Toleranzausgleichsfeder 47 den Betätigungsabschnitt 43 wieder axial nach außen, bis er sich mit der inneren Nutflanke 72 seiner Verriegelungsnut 68 von axial innen her an dem Verriegelungsvorsprung 63 abstützt. Damit liegt nun die betätigte und zugleich verriegelte Stellung des Betätigungsstößels 34 vor (Figuren 6 und 7).

Durch dieses axiale Zurückweichen des Betätigungsabschnittes 43 vergrößern die beiden Abschnitte 43, 44 ihren Abstand zueinander geringfügig, so dass der gemäß Figuren 3 und 4 kurzzeitig auf Null verringerte axiale Abstand zwischen den Anschlagvorsprüngen 52, 53 sich wieder geringfügig vergrößert. Der sich einstellende Zwischenraum ist in Figuren 6 und 7 bei 74 ersichtlich.

Ersichtlich ist also die Auslegung insbesondere so getroffen, dass bei verriegeltem Betätigungsabschnitt 43 zwischen dem Betätigungsabschnitt 43 und dem Antriebsabschnitt 44 ein Restspielraum verbleibt, der prinzipiell eine weitere gegenseitige Annäherung der beiden Abschnitte 43, 44 des Betätigungsstößels 34 gestattet. Im übrigen wird man das System insbesondere so auslegen, dass der Verriegelungsvorgang nur ausgeführt werden kann, wenn zuvor der Betätigungsabschnitt 43 in einem die maximalen Verschiebetoleranzen von Antriebsabschnitt 44 und Ventilglied 8 berücksichtigenden Maß verschoben wurde.

Ist der Betätigungsabschnitt 43 auf diese Weise verriegelt, unterliegt die Toleranzausgleichsfeder 47 einer stärken Vorspannung als in der unbetätigten Stellung des Betätigungsstößels 34. Dadurch ist sichergestellt, dass der Antriebsabschnitt 44 bei verriegeltem Betätigungsstößel 34 stets mit einer aus der Toleranzausgleichsfeder 47 resultierenden Beaufschlagungskraft gegen das Ventilglied 8 vorgespannt ist.

Um die gewünschte Toleranzkompensation zu gewährleisten, ist es von Vorteil, wenn die in der Verschieberichtung 46 des Betätigungsstößels 34 gemessene Breite der Verriegelungsnut 64 größer ist als die in der gleichen Richtung gemessene Breite des Verriegelungsvorsprunges 63. Beispielhaft belaufen sich die entsprechenden Abmessungen des Verriegelungsvorsprunges 63 auf 1,5 mm und diejenigen der Verriegelungsnut 64 auf 1,7 mm.

Die Funktionsfähigkeit der Verriegelungsmittel 62 kann mit nur einer Aussparung 65 und auch nur einer Verriegelungsnut 68 gewährleistet werden. Damit jedoch die Verriegelungs- und Entriegelungsfunktion bei beliebigen Drehrichtungen gewährleistet werden kann, sind die vorgenannten Bestandteile beim Ausführungsbeispiel jeweils zweifach vorhanden, an sich diametral entgegengesetzten Umfangsbereichen des Betätigungsabschnittes 43.

Es ist auch von Vorteil, wenn die Aussparung 65 in die sich jeweils anschließende Verriegelungsnut 68 mit einer Schrägfläche 76 übergeht, um die Drehbewegung zu erleichtern.

Durch die geschilderte Ausgestaltung wird der Antriebsabschnitt 44 innerhalb der Fertigungstoleranzen der Ventileinrichtung 1 in der Verriegelungsstellung des Betätigungsabschnittes 43 zu keiner Zeit von diesem direkt beaufschlagt, sondern stets nur über die Toleranzausgleichsfeder 47. Dies gewährleistet, dass der Antriebsabschnitt 44 niemals eine zu starke oder zu geringe Betätigungskraft erfährt, was zu Problemen bei der Handhabung der Handhilfsbetätigungseinrichtung 33 führen könnte.

Für eine einfache Einleitung des zum Verriegeln und Entriegeln benötigten Drehmomentes "M" verfügt der Betätigungsabschnitt 43 an der dem Antriebsabschnitt 44 abgewandten Stirnseite zweckmäßigerweise über eine Werkzeugangriffspartie 75, in die mit einem Schraubendreher eingegriffen werden kann. Über diesen Schraubendreher oder ein alternatives Werkzeug kann auch die Betätigungskraft F_{B} von der menschlichen Hand in den Betätigungsabschnitt 43 eingeleitet werden.

Die Maßnahmen der Handhilfsbetätigungseinrichtung 33 sind nicht auf ein Vorsteuerventil 5 beschränkt. Auch ein zur unmittelbaren Fluidsteuerung und nicht zur Vorsteuerung eines Hauptventils dienendes elektrisch betätigbares Ventil kann damit ausgestattet werden.

## Patentansprüche

1. Ventileinrichtung, mit mindestens einem elektrisch betätigbaren Ventil (5), das ein durch elektrische Ansteuerung zwischen einer ersten Schaltstellung und einer zweiten Schaltstellung verlagerbares Ventilglied (8) aufweist, dem eine Handhilfsbetätigungseinrichtung (33) zugeordnet ist, die einen axial verschiebbaren Betätigungsstößel (34) aufweist, der durch manuelle Beaufschlagung eines Betätigungsabschnittes (43) entgegen der Kraft einer Rückstellfeder (56) aus einer unbetätigten Stellung in eine betätigte Stellung verschiebbar ist, um mit einem Antriebsabschnitt (44) auf das Ventilglied (8) einzuwirken und dieses aus der ersten Schaltstellung in die zweite Schaltstellung zu verlagern, und der durch Verriegelungsmittel (62) in der betätigten Stellung lösbar verriegelbar ist, um das Ventilglied (8) durch ständige Beaufschlagung in der zweiten Schaltstellung zu halten, **dadurch gekennzeichnet, dass** der Betätigungsabschnitt (43) und der Antriebsabschnitt (44) als in der Verschieberichtung (46) des Betätigungsstößels (34) relativ zueinander verschiebbare Teile ausgebildet sind, zwischen denen eine sie von einander wegdrückende, im Vergleich zu der Rückstellfeder (56) stärkere Toleranzausgleichsfeder (47) wirksam ist, die die manuell auf den Betätigungsabschnitt (43) ausgeübte Betätigungskraft auf den Antriebsabschnitt (44) übertragen kann, wobei die Rückstellfeder (56) an dem Antriebsabschnitt (44) angreift und wobei die Verriegelungsmittel (62) dem Betätigungsabschnitt (43) zugeordnet und so ausgebildet sind, dass die Toleranzausgleichsfeder (47) bei in der betätigten Stellung des Betätigungsstößels (34) verriegeltem Betätigungsabschnitt (43) stets stärker gespannt ist als in der unbetätigten Stellung des Betätigungsstößels (34).

2. Ventileinrichtung nach Anspruch 1, **dadurch gekennzeichnet, dass** das Ventilglied (8) in der ersten Schaltstellung an einem Ventilsitz (18) anliegt und in der zweiten Schaltstellung gegen eine Federkraft von dem Ventilsitz (18) abgehoben ist.

3. Ventileinrichtung nach Anspruch 1 oder 2, **dadurch gekennzeichnet, dass** das elektrisch betätigbare Ventil (5) ein Magnetventil mit einer Elektromagneteinrichtung (7) ist.

4. Ventileinrichtung nach einem der Ansprüche 1 bis 3, **dadurch gekennzeichnet, dass** der Betätigungsstößel (34) quer zur Bewegungsrichtung des Ventilgliedes (8) verschiebbar ist.

5. Ventileinrichtung nach einem der Ansprüche 1 bis 4, **dadurch gekennzeichnet, dass** der Betätigungsabschnitt (43) und der Antriebsabschnitt (44) als zwei gesonderte Teile ausgebildet sind, wobei zweckmäßigerweise der Betätigungsabschnitt (43) und der Antriebsabschnitt (44) quer zur Verschieberichtung (46) des Betätigungsstößels (34) ineinander eingesteckt sind.

6. Ventileinrichtung nach einem der Ansprüche 1 bis 5, **dadurch gekennzeichnet, dass** der Betätigungsabschnitt (43) und der Antriebsabschnitt (44) in der Verschieberichtung (46) des Betätigungsstößels (34) relativ zueinander verschiebbar miteinander in Eingriff stehen.

7. Ventileinrichtung nach einem der Ansprüche 1 bis 6, **dadurch gekennzeichnet, dass** an dem Betätigungsabschriitt (43) und an dem Antriebsabschnitt (44) miteinander kooperierende Anschlagmittel (48) vorhanden sind, die die gegenseitige Verschiebbarkeit der beiden Abschnitte (43, 44) sowohl beim Auseinanderfahren als auch beim Zusammenschieben begrenzen und **dadurch** einen maximalen axialen Verschiebehub zwischen Betätigungsabschnitt (43) und Antriebsabschnitt (44) vorgeben.

8. Ventileinrichtung nach einem der Ansprüche 1 bis 7, **dadurch gekennzeichnet, dass** die Toleranzausgleichsfeder (47) schon in der unbetätigten Stellung des Betätigungsstößels (34) unter einer axialen Vorspannung steht und **dadurch** den Betätigungsabschnitt (43) und den Antriebsabschnitt (44) in einer maximal auseinandergefahrenen, durch Anschlagmittel (48) definierten Relativposition hält.

9. Ventileinrichtung nach einem der Ansprüche 1 bis 8, **dadurch gekennzeichnet, dass** die Toleranzausgleichsfeder (47) im Innern des Betätigungsstößels (34) untergebracht ist.

10. Ventileinrichtung nach einem der Ansprüche 1 bis 9, **dadurch gekenntzeichnet, dass** die Rückstellfeder (56) im Bereich der dem Betätigungsabschnitt (43) abgewandten Stirnseite des Antriebsabschnittes (44) angeordnet ist.

11. Ventileinrichtung nach einem der Ansprüche 1 bis 10, **dadurch gekennzeichnet, dass** der axiale Verschiebespielraum zwischen dem Betätigungsabschnitt (43) und dem Antriebsabschnitt (44) so groß gewählt ist, dass ein prinzipiell eine weitere gegenseitige Annäherung von Betätigungsabschnitt (43) und Antriebsabschnitt (44) ermöglichender Restspielraum verbleibt, wenn das Ventilglied (8) durch den Antriebsabschnitt (44) in die zweite Schaltstellung verlagert und der Betätigungsabschnitt (43) verriegelt ist.

12. Ventileinrichtung nach einem der Ansprüche 1 bis 11, **dadurch gekennzeichnet, dass** die Verriegelungsmittel (62) derart ausgebildet sind, dass der Verriegelungsvorgang nur ausführbar ist, wenn der Betätigungsabschnitt (43) in einem die maximalen Verschiebetoleranzen von Antriebsabschnitt (44) und Ventilglied (8) berücksichtigenden Maß verschoben wurde.

13. Ventileinrichtung nach einem der Ansprüche 1 bis 12, **dadurch gekennzeichnet, dass** die Verriegelungsmittel (62) derart ausgebildet sind, dass sie durch Verdrehen des Betätigungsabschnittes (43) um seine Längsachse in und außer Verriegelungseingriff bringbar sind, wobei zweckmäßigerweise der Betätigungsabschnitt (43) ein Drehriegelglied bildet.

14. Ventileinrichtung nach Anspruch 13, **dadurch gekennzeichnet, dass** der Betätigungsstößel (34) zum Verlagern zwischen der unbetätigten und der betätigten Stellung relativ zu einem Grundkörper (6) verschiebbar ist, wobei die Verriegelungsmittel (62) einen fest an dem Grundkörper (6) angeordneten, im unverriegelten Zustand in eine umfangsseitige Aussparung (65) des Betätigungsabschnittes (43) eintauchenden Verriegelungsvorsprung (63) aufweisen, wobei die axialen Begrenzungsflächen (66, 67) der Aussparung (65) geeignet sind, durch Zusammenwirken mit dem Verriegelungsvorsprung (63) den Verschiebeweg des Betätigungsabschnittes (43) zu begrenzen, wobei sich an diese Aussparung (65) in der Umfangsrichtung des Betätigungsabschnittes (43) eine in der Verschieberichtung (46) des Betätigungsstößels (34) geringere Abmessungen als die Aussparung (65) aufweisende Verriegelungsnut (64) anschließt, in die der Verriegelungsvorsprung (63) zum Verriegeln der betätigten Stellung eingreift, wenn der Betätigungsabschnitt (43) bei auf gleicher axialer Höhe mit dem Verriegelungsvorsprung (63) angeordneter Verriegelungsnut (64) verdreht wird.

15. Ventileinrichtung nach Anspruch 14, **dadurch gekennzeichnet, dass** die in der Verschieberichtung (46) des Betätigungsstößels (34) gemessene Breite der Verriegelungsnut (64) größer ist als die Breite des Verriegelungsvorsprunges (63).

16. Ventileinrichtung nach Anspruch 14 oder 15, **dadurch gekennzeichnet, dass** der Betätigungsstößel (34) in einer Führungsausnehmung (35) eines Grundkörpers (6) axial verschiebbar aufgenommen ist, wobei der Verriegelungsvorsprung (63) von einem stiftartigen Verriegelungselement (64) gebildet ist, das die Führungsausnehmung (35) im Bereich ihres Außenumfanges dem Verlauf einer Sekante folgend quer durchsetzt.

17. Ventileinrichtung nach einem der Ansprüche 1 bis 16, **gekennzeichnet durch** ein fluidisch betätigbares Hauptventil (2), an dem mindestens ein mit einer Handhilfsbetätigungseinrichtung (33) ausgestattetes, elektrisch betätigbares Ventil (5) als Vorsteuerventil angeordnet ist.

## Claims

1. Valve unit, with at least one electrically actuable valve (5), which has a valve member (8) movable by electrical activation between a first operating position and a second operating position, and to which is assigned a manual auxiliary actuating device (33) which has an axially slidable actuating plunger (34) which may be slid through manual application of an actuating section (43), against the force of a restoring spring (56), from an unactuated position into an actuated position, in order to act with a drive section (44) on the valve member (8) to shift the latter from the first operating position into the second operating position, and which may be locked releasably by interlocking means (62) in the actuated position, in order to hold the valve member (8) in the second operating position by permanently acting upon it, **characterised in that** the actuating section (43) and the drive section (44) are in the form of parts which are able to slide relative to one another in the direction of sliding (46) of the actuating plunger (34) and between which a tolerance compensation spring (47), more powerful than the restoring spring (56) is effective in pushing them away from one another and is able to transmit to the drive section (44) the actuating force exerted manually on the actuating section (43), wherein the restoring spring (56) acts on the drive section (44) and wherein the interlocking means (62) are assigned to the actuating section (43) and are so designed that the tolerance compensation spring (47), with the actuating section (43) interlocked in the actuated position of the actuating plunger (34), is always more strongly tensioned than in the unactuated position of the actuating plunger (34).

2. Valve unit according to claim 1 **characterised in that**, in the first operating position the valve member (8) abuts a valve seat (18), and in the second operating position it is lifted from the valve seat (18) against a spring force.

3. Valve unit according to claim 1 or 2, **characterised in that** the electrically actuable valve (5) is a solenoid valve with an electromagnet device (7).

4. Valve unit according to any of claims 1 to 3, **characterised in that** the actuating plunger (34) is able to slide at right-angles to the direction of movement of the valve member (8).

5. Valve unit according to any of claims 1 to 4, **characterised in that** the actuating section (43) and the drive section (44) are designed as two separate components, wherein expediently the actuating section (43) and the drive section (44) are inserted into one another at right-angles to the direction of sliding (46) of the actuating plunger (34).

6. Valve unit according to any of claims 1 to 5, **characterised in that** the actuating section (43) and the drive section (44) engage with one another so as to be able to slide relative to one another in the direction of sliding (46) of the actuating plunger (34).

7. Valve unit according to any of claims 1 to 6 **characterised in that**, provided on the actuating section (43) and the drive section (44) are stop means (48) cooperating with one another and limiting the mutual ability to slide of the two sections (43, 44) both when moving apart and when moving together, and thereby presetting a maximum axial sliding distance between the actuating section (43) and the drive section (44).

8. Valve unit according to any of claims 1 to 7, **characterised in that** the tolerance compensation spring (47) is already under an axial preload in the unactuated position of the actuating plunger (34), thereby holding the actuating section (43) and the drive section (44) in a maximum extended relative position defined by stop means (48).

9. Valve unit according to any of claims 1 to 8, **characterised in that** the tolerance compensation spring (47) is accommodated inside the actuating plunger (34).

10. Valve unit according to any of claims 1 to 9, **characterised in that** the restoring spring (56) is located in the area of the end face of the drive section (44) facing away from the actuating section (43).

11. Valve unit according to any of claims 1 to 10, **characterised in that** the axial sliding play between the actuating section (43) and the drive section (44) is made large enough that in principle residual play allowing a further mutual approach of the actuating section (43) and the drive section (44) remains when the valve member (8) is shifted by the drive section (44) into the second operating position, and the actuating section (43) is interlocked.

12. Valve unit according to any of claims 1 to 11, **characterised in that** the interlocking means (62) are so designed that the interlocking process may be executed only if the actuating section (43) has been shifted by an amount which allows for the maximum sliding tolerances of drive section (44) and valve member (8).

13. Valve unit according to any of claims 1 to 12, **characterised in that** the interlocking means (62) are so designed that they may be brought into and out of interlocking engagement by rotation of the actuating section (43) around its longitudinal axis, wherein expediently the actuating section (43) forms a rotary locking member.

14. Valve unit according to claim 13 **characterised in that**, for shifting between the unactuated and the actuated position, the actuating plunger (34) may be slid relative to a base (6), wherein the interlocking means (62) have an interlocking projection (63) fixed to the base (6) which in the unlocked state dips into a peripheral recess (65) of the actuating section (43), wherein the axial boundary surfaces (66, 67) of the recess (65) are suitable, through interaction with the interlocking projection (63), for limiting the sliding distance of the actuating section (43), wherein this recess (65) is followed in the circumferential direction of the actuating section (43) by an interlocking slot (64) with smaller dimensions than the recess in the direction of sliding (46) of the actuating plunger (34), and in which the interlocking projection (63) engages to interlock the actuated position if the actuating section (43) is rotated when the interlocking slot (64) is at the same axial height as the interlocking projection (63).

15. Valve unit according to claim 14, **characterised in that** the width of the interlocking slot (64), measured in the direction of sliding (46) of the actuating plunger (34), is greater than the width of the interlocking projection (63).

16. Valve unit according to claim 14 or 15, **characterised in that** the actuating plunger (34) is located, with axial sliding facility, in a guide recess (35) of a base (6), wherein the interlocking projection (63) is formed by a pin-like interlocking element (64) which passes through the guide recess (35) in the area of its outer circumference, following the course of a secant.

17. Valve unit according to any of claims 1 to 16, **characterised by** a main valve (2) capable of operation by fluidic means, on which is mounted as pilot valve an electrically actuable valve (5) equipped with a manual auxiliary actuating device (33).

## Revendications

1. Dispositif à vannes, comportant au moins une vanne (5) actionnable électriquement, qui comporte un élément fonctionnel (8), qui est apte à être déplacé par une commande électrique entre une première position de commande et une deuxième position de commande et auquel est associé un dispositif de commande auxiliaire manuel (33), qui comporte un poussoir de commande (34) mobile axialement, lequel, sous l'effet d'une sollicitation manuelle d'une section de commande (43), peut être déplacé à l'encontre de la force d'un ressort de rappel (56) hors d'une position inactive dans une position active, afin d'agir par une section d'actionnement (44) sur l'élément fonctionnel (8) et déplacer ce dernier hors de la première position de commande dans la deuxième position de commande, et lequel peut être verrouillé de manière non permanente dans la position active par des moyens de verrouillage (62), afin de maintenir l'élément fonctionnel (8) dans la deuxième position de commande sous l'effet d'une sollicitation permanente, **caractérisé en ce que** la section de commande (43) et la section d'actionnement (44) sont réalisées sous forme de parties mobiles l'une par rapport à l'autre dans la direction de déplacement (46) du poussoir de commande (34), entre lesquelles agit un ressort de compensation de tolérances (47) pour les écarter l'une de l'autre, lequel est plus puissant que le ressort de rappel (56) et lequel peut transmettre sur la section d'actionnement (44) la force de commande exercée manuellement sur la section de commande (43), le ressort de rappel (56) entrant en contact avec la section d'actionnement (44) et les moyens de verrouillage (62) étant associés à la section de commande (43) et étant réalisés de telle sorte que, dans le cas d'une section de commande (43) verrouillée dans la position active du poussoir de commande (34), le ressort de compensation de tolérances (47) est toujours plus fortement tendu que dans la position inactive du poussoir de commande (34).

2. Dispositif à vannes selon la revendication 1, **caractérisé en ce que** l'élément fonctionnel (8), dans la première position de commande, est en appui contre un siège de vanne (18) et, dans la deuxième position de commande, est soulevé du siège de vanne (18) dans le sens opposé à une force de ressort.

3. Dispositif à vannes selon la revendication 1 ou 2, **caractérisé en ce que** la vanne (5) actionnable électriquement est une vanne magnétique avec un dispositif à électroaimant (7).

4. Dispositif à vannes selon l'une des revendications 1 à 3, **caractérisé en ce que** le poussoir de commande (34) peut être déplacé transversalement à la direction de déplacement de l'élément fonctionnel (8).

5. Dispositif à vannes selon l'une des revendications 1 à 4, **caractérisé en ce que** la section de commande (43) et la section d'actionnement (44) sont réalisées sous forme de deux parties séparées, et **en ce qu'**avantageusement ladite section de commande (43) et ladite section d'actionnement (44) sont enfichées l'une dans l'autre transversalement à la direction de déplacement (46) du poussoir de commande (34).

6. Dispositif à vannes selon l'une des revendications 1 à 5, **caractérisé en ce que** la section de commande (43) et la section d'actionnement (44) sont en prise l'une avec l'autre de manière mobile l'un par rapport à l'autre dans la direction de déplacement (46) du poussoir de commande (34).

7. Dispositif à vannes selon l'une des revendications 1 à 6, **caractérisé en ce que** sur la section de commande (43) et sur la section d'actionnement (44) sont prévus des moyens de butée (48) coopérant entre eux, qui délimitent la mobilité en sens opposés, des deux sections (43, 44) tant pour s'écarter l'une de l'autre que pour se rapprocher l'une de l'autre et, de ce fait, définissent une course de déplacement axiale maximale entre la section de commande (43) et la section d'actionnement (44).

8. Dispositif à vannes selon l'une des revendications 1 à 7, **caractérisé en ce que** le ressort de compensation de tolérances (47) est mis en précontrainte axiale déjà dans la position inactive du poussoir de commande (34) et, de ce fait, maintient la section de commande (43) et la section d'actionnement (44) dans une position relative avec un écartement maximal l'une par rapport à l'autre, définie par les moyens de butée (48).

9. Dispositif à vannes selon l'une des revendications 1 à 8, **caractérisé en ce que** le ressort de compensation de tolérances (47) est logé à l'intérieur du poussoir de commande (34).

10. Dispositif à vannes selon l'une des revendications 1 à 9, **caractérisé en ce que** le ressort de rappel (56) est disposé dans la zone de la face frontale de la section d'actionnement (44), détournée de la section de commande (43).

11. Dispositif à vannes selon l'une des revendications 1 à 10, **caractérisé en ce que** le jeu axial entre la section de commande (43) et la section d'actionnement (44) est choisi avec une dimension telle qu'il subsiste un jeu résiduel permettant en principe un autre rapprochement l'une vers l'autre de la section de commande (43) et de la section d'actionnement (44), lorsque l'élément fonctionnel (8) est déplacé par la section d'actionnement (44) dans la deuxième position de commande et que la section de commande (43) est verrouillée.

12. Dispositif à vannes selon l'une des revendications 1 à 11, **caractérisé en ce que** les moyens de verrouillage (62) sont réalisés de telle sorte que le processus de verrouillage ne peut être exécuté que lorsque la section de commande (43) a été déplacée d'une valeur tenant compte des tolérances de déplacement maximum de la section d'actionnement (44) et de l'élément fonctionnel (8).

13. Dispositif à vannes selon l'une des revendications 1 à 12, **caractérisé en ce que** les moyens de verrouillage (62) sont réalisés de telle sorte qu'ils peuvent être amenés en prise et hors de prise de verrouillage sous l'effet d'une rotation de la section de commande (43) autour de son axe longitudinal, et **en ce que**, de manière avantageuse, ladite section de commande (43) forme un organe de verrouillage rotatif.

14. Dispositif à vannes selon la revendication 13, **caractérisé en ce que** le poussoir de commande (34) peut être déplacé par rapport à un corps de base (6) pour le déplacement entre la position inactive et la position active, les moyens de verrouillage (62) comportant une saillie de verrouillage (63), disposée de manière fixe sur le corps de base (6) et pénétrant à l'état non verrouillé dans un évidement (65) sur le pourtour de la section de commande (43), les surfaces de délimitation (66, 67) axiales de l'évidement (65) étant aptes à délimiter la trajectoire de déplacement de la section de commande (43) par coopération avec la saillie de verrouillage (63), une rainure de verrouillage (64), dont les dimensions, dans la direction de déplacement (46) du poussoir de commande (34), sont plus petites que celles de l'évidement (65), étant située dans le prolongement de cet évidement (65) dans la direction circonférentielle de la section de commande (43), la saillie de verrouillage (63) s'engageant dans ladite rainure de verrouillage pour le verrouillage de la position active, si l'on fait tourner la section de commande (43) lorsque la rainure de verrouillage (64) est disposée à la même hauteur axiale que la saillie de verrouillage (63).

15. Dispositif à vannes selon la revendication 14, **caractérisé en ce que** la largeur de la rainure de verrouillage (64), mesurée dans la direction de déplacement (46) du poussoir de commande (34), est supérieure à la largeur de la saillie de verrouillage (63).

16. Dispositif à vannes selon la revendication 14 ou 15, **caractérisé en ce que** le poussoir de commande (34) est logé de manière mobile dans le sens axial dans un évidement de guidage (35) d'un corps de base (6), la saillie de verrouillage (63) étant formée par un élément de verrouillage (64) en forme de tige qui, en suivant le tracé d'une sécante, traverse transversalement l'évidement de guidage (35) dans la zone de son pourtour extérieur.

17. Dispositif à vannes selon l'une des revendications 1 à 16, **caractérisé par** une vanne principale (2) actionnable par un fluide, sur laquelle est disposée au moins une vanne (5) faisant fonction de vanne pilote, actionnable électriquement et munie d'un dispositif de commande auxiliaire manuel (33).
